# EUROPÄISCHE PATENTSCHRIFT

(11) **EP 2 873 876 B1**
(45) Veröffentlichungstag und Bekanntmachung des Hinweises auf die Patenterteilung: **19.09.2018**
(21) Anmeldenummer: 14192858.0
(22) Anmeldetag: 12.11.2014
(51) Int. Cl.: F16B 11/00, C09J 5/00

(54) **Fügeverfahren, Herstellungsverfahren, Bauteilanordnung und Fahrzeugsitz**
Joining method, manufacturing method, component assembly and vehicle seat
Procédé d'assemblage, procédé de fabrication, système de composant et siège de véhicule

(30) Priorität: 15.11.2013 DE 102013019050
(43) Veröffentlichungstag der Anmeldung: 20.05.2015
(73) Patentinhaber: Adient Luxembourg Holding S.à r.l., 1855 Luxembourg (LU)
(72) Erfinder: Dannheisig, Andreas, 48336 Sassenberg (DE); Schulze, Carina, 45239 Essen (DE); Flock, Dustin, 51069 Köln (DE); Gross, Bernd, 40764 Langenfeld (DE)
(74) Vertreter: Loock, Jan Pieter

(56) Entgegenhaltungen:
- EP-A1- 0 268 352
- DE-A1-102010 044 115
- US-A- 4 545 840
- US-A- 5 232 962
- US-A- 6 074 506

## Beschreibung

### Stand der Technik

Die vorliegende Erfindung geht aus von einem Fügeverfahren nach dem Oberbegriff des Anspruchs 1.

Solche Fügeverfahren sind allgemein bekannt und dienen dazu, zwei Bauteile mittels einer Klebeverbindung dauerhaft miteinander zu verbinden. Es ist ferner bekannt, die Bauteile mit Sicken auszubilden oder dem Klebemittel starre Abstandsmittel aus Glas beizusetzen, um eine definierte Schichtdicke des Klebemittels zu erzielen.

Das Einbringen von Sicken in die Bauteile ist vergleichsweise aufwändig und setzt die Verwendung von Bauteilen voraus, welche sich überhaupt mit einer Sicke versehen lassen. Ferner ist die Verwendung von glasförmigen Abstandsmitteln nachteilig, da diese Abstandsmittel bei hohen Anpressdrücken zwischen den Bauteilen häufig zerbersten. Ferner verbinden sich diese glasförmigen Abstandsmittel nicht dauerhaft mit dem Klebemittel, so dass die Verbindung zwischen den beiden Bauteilen im Bereich der Abstandsmittel geschwächt ist.

Aus der Druckschrift US 6 074 506 A ist ein Verfahren zum Kleben von zwei Komponenten bekannt, bei dem in einem ersten Verfahrensschritt nicht komprimierbare Kügelchen mit einem Klebstoff gemischt werden, in einem zweiten Verfahrensschritt die resultierende Mischung auf eine der beiden Komponenten aufgetragen wird und in einem dritten Verfahrensschritt die beiden Komponenten in übereinanderliegender Weise gefalzt werden.

### Offenbarung der Erfindung

Es ist eine Aufgabe der vorliegenden Erfindung, ein auf einer Klebeverbindung basierendes Fügeverfahren zur Verfügung zu stellen, welches die Erzeugung einer hochfesten Klebeverbindung zwischen zwei Bauteilen mit einer definierten Klebeschichtdicke erlaubt, ohne dass Schwächungen in der Klebeschicht auftreten.

Diese Aufgabe wird gelöst durch ein Fügeverfahren zur Verbindung eines ersten Bauteils mit einem zweiten Bauteil, wobei in einem ersten Verfahrensschritt das erste Bauteil, das zweite Bauteil und ein zwischen dem ersten und dem zweiten Bauteil angeordnetes Klebemittel bereitgestellt werden, wobei in einem zweiten Verfahrensschritt das erste und das zweite Bauteil zusammengepresst werden und wobei in einem dritten Verfahrensschritt das Klebemittel ausgehärtet wird, wobei ferner dem Klebemittel Abstandsmittel beigefügt werden, welche im dritten Verfahrensschritt vom Klebemittel zumindest teilweise resorbiert werden, wobei die Abstandsmittel aus einem mit einem Bindemittel beschichteten Trägermaterial hergestellt werden.

Das erfindungsgemäße Fügeverfahren hat gegenüber dem Stand der Technik den Vorteil, dass zur Einstellung der definierten Klebeschichtdicke Abstandsmittel in der Klebeschicht Verwendung finden, welche vom Klebemittel zumindest teilweise resorbiert werden und somit selbst eine dauerhafte und hochbelastbare Verbindung mit dem Klebemittel eingehen. Vorteilhafterweise wird die Klebeverbindung durch das Einbringen der Abstandsmittel daher nicht geschwächt. Es wird also die Erzeugung einer hochfesten Klebeverbindung zwischen den beiden Bauteilen mit einer definierten Klebeschichtdicke ermöglicht, ohne dass Schwächungen in der Klebeschicht auftreten. Das Aushärten des Klebemittels im dritten Verfahrensschritt erfolgt vorzugsweise unter Wärmezufuhr. Das Klebemittel umfasst insbesondere einen Kleber, der beispielsweise Ziehöle in der Kleber-Aushärtungshitze resorbieren kann, ohne dabei Festigkeitseinbußen zu erfahren. Die Abstandsmittel sind nun derart ausgebildet, dass deren Materialien zumindest teilweise bei der Kleber-Aushärtungshitze im Klebemittel resorbiert werden.

Vorteilhafte Ausgestaltungen und Weiterbildungen der Erfindung sind den Unteransprüchen sowie der Beschreibung unter Bezugnahme auf die Zeichnungen entnehmbar.

Gemäß einer bevorzugten Weiterbildung der vorliegenden Erfindung ist vorgesehen, dass im dritten Verfahrensschritt das Klebemittel mittels kathodischer Tauchlackierung ausgehärtet wird. Denkbar ist, dass das erste und zweite Bauteil in ein Tauchbad getaucht werden. Bei der dabei auftretenden Hitze wird das Klebemittel unter teilweiser Resorption der Abstandsmittel ausgehärtet.

Gemäß einer bevorzugten Weiterbildung der vorliegenden Erfindung ist vorgesehen, dass dem Klebemittel starre oder halbstarre Abstandsmittel beigefügt werden und/oder dass dem Klebemittel kugelförmige Abstandsmittel beigefügt werden. In vorteilhafter Weise dienen die insbesondere starren oder halbstarren kugelförmigen Abstandsmittel dazu, das erste und zweite Bauteil solang voneinander zu beabstanden, bis das Klebemittel ausgehärtet ist. Auf diese Weise wird die definierte Klebeschichtdicke erreicht.

Erfindungsgemäß ist vorgesehen, dass die Abstandsmittel aus einem mit einem Bindemittel beschichteten Trägermaterial hergestellt werden. Das Trägermittel umfasst beispielsweise ein metallisches Material. Die Abstandsmittel sind somit beispielsweise aus Aluminiumkügelchen hergestellt, welche mit dem Bindemittel beschichtet werden. Das mit dem Trägermittel verbundene Bindemittel wird im dritten Verfahrensschritt dann vom Klebemittel resorbiert und geht somit eine stoffschlüssige Verbindung mit dem Klebemittel ein. Vorteilhafterweise erlaubt das Trägermittel vergleichsweise hohe Anpressdrücke zwischen dem ersten und dem zweiten Bauteil im zweiten Verfahrensschritt. Denkbar ist, dass das Bindemittel in einem vor dem zweiten Verfahrensschritt durchgeführten Zwischenschritt aktiviert wird. Denkbar ist, dass das Trägermittel mit dem Bindemittel benetzt oder vorher durch eine Oberflächenbehandlung aktiviert im Klebemittel bereitgestellt wird, so dass bei Hitzeeinwirkung eine deutlich verbesserte Anbindung zum Klebemittel und zu den Fügepartnern, d. h. den miteinander zu verbindenden Bauteilen, entsteht.

Gemäß einer weiteren bevorzugten Weiterbildung der vorliegenden Erfindung ist vorgesehen, dass die Abstandsmittel im dritten Verfahrensschritt zumindest teilweise im Klebemittel gelöst und/oder chemisch gebunden werden. Dies wird insbesondere dadurch erzielt, dass die Abstandsmittel bei der im dritten Verfahrensschritt auftretenden Klebemittel-Aushärtungshitze im Klebemittel resorbiert bzw. gelöst und/oder chemisch gebunden werden. Denkbar ist, dass der dritte Verfahrensschritt in einem Tauchbad zur Durchführung einer kathodischen Tauchlackierung erfolgt.

Gemäß einer weiteren bevorzugten Weiterbildung der vorliegenden Erfindung ist vorgesehen, dass im ersten Verfahrensschritt das Klebemittel auf das erste und/oder zweite Bauteil appliziert wird, wobei die Abstandsmittel dem Klebemittel beim Applizieren des Klebemittels auf das erste und/oder zweite Bauteil oder zeitlich vor dem Applizieren des Klebemittels auf das erste und/oder zweite Bauteil beigefügt werden. Denkbar ist, dass die Abstandsmittel erst während des Applizierens untergemischt werden oder bereits vorher ein Klebemittel mit untergemischten Abstandsmitteln hergestellt wird, welches sodann auf das erste und/oder zweite Bauteil appliziert wird.

Gemäß einer weiteren bevorzugten Weiterbildung der vorliegenden Erfindung ist vorgesehen, dass wobei im ersten Verfahrensschritt das erstes Bauteil in Form eines ersten Blechbauteils und das zweite Bauteil in Form eines zweiten Blechbauteils bereitgestellt werden. In vorteilhafter Weise sind mit dem erfindungsgemäßen Fügeverfahren somit Blechbauteile stoffschlüssig miteinander zu verbinden.

Ein weiterer Gegenstand der vorliegenden Erfindung ist ein Herstellungsverfahren zur Herstellung eines Fahrzeugsitzes mit einem ersten Bauteil und einem zweiten Bauteil, wobei das erste Bauteil mit dem zweiten Bauteil mittels des erfindungsgemäßen Fügeverfahrens verbunden wird. In vorteilhafter Weise können somit mehrere Bauteile des Fahrzeugsitzes untereinander verklebt werden und eine hochfeste Klebeverbindung zwischen den Bauteilen mit einer definierten Klebeschichtdicke erzielt werden.

Ein weiterer Gegenstand der vorliegenden Erfindung ist eine Bauteilanordnung mit einem ersten Bauteil und einem zweiten Bauteil, wobei das erste Bauteil und das zweite Bauteil über eine Klebestelle miteinander verbunden sind, wobei im Bereich der Klebestelle ein ausgehärtetes Klebemittel angeordnet ist, wobei das ausgehärtete Klebemittel mit zumindest teilweise vom Klebemittel resorbierten Abstandsmitteln versetzt ist. Die erfindungsgemäße Bauteilanordnung hat gegenüber dem Stand der Technik den Vorteil, dass sie trotz der mittels den Abstandsmitteln erzeugten definierten Klebeschichtdicke im Bereich der Klebeverbindung wesentlich stabiler ausgebildet ist, da durch die zumindest teilweise Resorption der Abstandsmittel im Klebemittel keine Schwächung der Klebeverbindung auftritt. Aufgrund der Resorption sind insbesondere die Abstandsmittel zumindest teilweise im Klebemittel gelöst und/oder chemisch gebunden, wodurch die hohe Festigkeit im Bereich der Klebeverbindung erzielt wird. Zudem ist die Bauteilanordnung vergleichsweise schnell, einfach und somit kostengünstig herstellbar. Die Abstandsmittel sind vorzugsweise als kugelförmige starre oder halbstarre Abstandsmittel ausgebildet. Das erste Bauteil umfasst vorzugsweise ein erstes Blechbauteil und das zweite Bauteil ein zweites Blechbauteil.

Erfindungsgemäß st vorgesehen, dass die Abstandsmittel ein Trägermaterial, vorzugsweise Aluminiumkügelchen, aufweisen, welches jeweils mit einem Bindemittel beschichtet ist.

Ein weiterer Gegenstand der vorliegenden Erfindung ist ein Fahrzeugsitz aufweisend eine erfindungsgemäße Bauteilanordnung.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

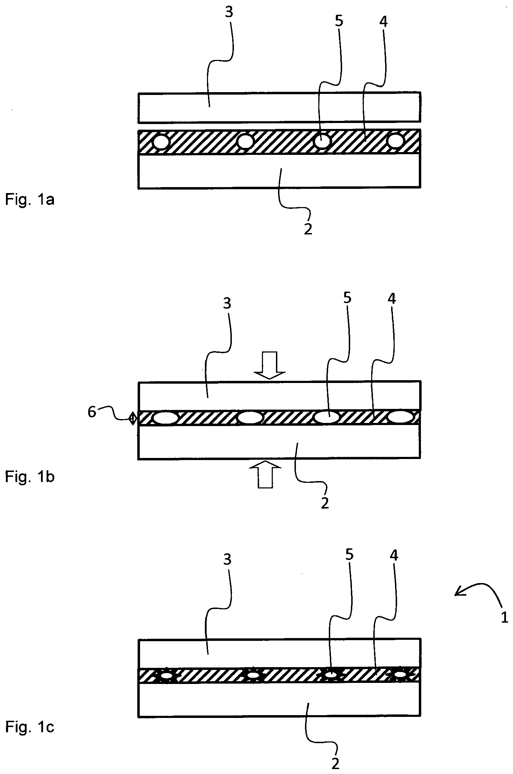

- Figuren 1a, 1b und 1c: zeigen schematisch ein Fügeverfahren gemäß einer beispielhaften Ausführungsform der vorliegenden Erfindung sowie eine Bauteilanordnung gemäß der beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In **Figuren 1a, 1b und 1c** ist jeweils ein Fügeverfahren zur Herstellung einer Bauteilanordnung 1 gemäß einer beispielhaften Ausführungsform der vorliegenden Erfindung schematisch dargestellt. In Figur 1c ist zudem die fertiggestellte Bauteilanordnung 1 gemäß der beispielhaften Ausführungsform der vorliegenden Erfindung schematisch illustriert.

In einem ersten Verfahrensschritt, illustriert in **Figur 1a****,** wird ein erstes Bauteil 2 und ein mit dem ersten Bauteil 2 zu verbindendes zweites Bauteil 3 bereitgestellt. Das erste Bauteil 2 und das zweite Bauteil 3 sind dabei jeweils ein Blechbauteil. Auf eine dem zweiten Bauteil 3 zugewandte Seite des ersten Bauteils 2 wird zudem ein flüssiges oder zumindest zählflüssiges Klebemittel 4 appliziert. Dem Klebemittel 4 sind dabei in einem nicht erfindungsgemäßen Verfahren Abstandsmittel 5 in Form von kleinen, starren oder halbstarren Kunststoffkügelchen, vorzugsweise aus Monomer oder Pre-Polymer gefertigt, zugefügt. Denkbar ist, dass die Abstandsmittel 5 bereits zeitlich vor dem Applizieren des Klebemittels 4 unter das Klebemittel 4 gemischt wurden oder dass die Abstandsmittel 5 beim Applizieren des Klebemittels 4 auf das erste Bauteil 2 unter das Klebemittel 4 gemischt werden.

In **Figur 1b** ist ein zweiter Verfahrensschritt dargestellt, in welchem das erste und das zweite Bauteil 2, 3 derart aufeinander gepresst werden (siehe Pfeile), dass zwischen dem ersten und dem zweiten Bauteil 2, 3 das mit den Abstandsmitteln 5 versetzte Klebemittel 4 angeordnet ist. Die halbstarren oder starren Abstandsmittel 5 sorgen dafür, dass die aus dem Klebemittel 4 bestehende Klebeschicht nicht vollständig zusammengepresst wird, sondern dass ein vordefinierter Abstand 6 zwischen dem ersten und dem zweiten Bauteil 2, 3 bestehen bleibt. Dieser Abstand sorgt auch bei hohen Anpressdrücken für eine definierte Klebeschichtdicke.

Anschließend wird das Klebemittel 4 in einem dritten Verfahrensschritt, welcher anhand von **Figur 1c** illustriert ist, ausgehärtet. Hierbei wird der Bauteilanordnung 1 aus erstem und zweitem Bauteil 2, 3 Wärme zugeführt, beispielsweise in einem Tauchbecken bei einer kathodischen Tauchlackierung (KTL). Die nicht erfindungsgemäße Ausbildung der Abstandsmittel 5 in Form von Kunststoffkügelchen, vorzugsweise gefertigt aus Pre-Polymeren, führt dazu, dass die Abstandsmittel 5 im Klebemittel 4 resorbiert werden. Es wird somit eine chemische Verbindung zwischen den Abstandsmitteln 5 selbst und dem ausgehärteten Klebemittel 4 erzeugt, wodurch eine Klebeverbindung zwischen dem ersten und dem zweiten Bauteil 2, 3 mit hoher Festigkeit und ohne Schwächungen in der Klebeschicht erzielt wird.

In einer erfindungsgemäßen Abwandlung des vorstehend beschriebenen Verfahrens bestehen die Abstandsmittel 5 aus Aluminiumkügelchen, welche mit einem Bindemittel beschichtet sind, wobei im dritten Verfahrensschritt das mit den Aluminiumkügelchen verbundene Bindemittel im Klebemittel 4 resorbiert wird, so dass auch hier eine feste Verbindung zwischen den Abstandsmittel 5 und dem Klebemittel 4 erzielt wird.

Die auf die vorstehend beschriebene Weise hergestellte und in Figur 1c gezeigte Bauteilanordnung 1 ist vorzugsweise Teil eines nicht abgebildeten Fahrzeugsitzes.

### Bezugszeichenliste

- 1: Bauteilanordnung
- 2: erstes Bauteil
- 3: zweites Bauteil
- 4: Klebemittel
- 5: Abstandsmittel
- 6: Abstand

## Patentansprüche

1. Fügeverfahren zur Verbindung eines ersten Bauteils (2) mit einem zweiten Bauteil (3), wobei in einem ersten Verfahrensschritt das erste Bauteil (2), das zweite Bauteil (3) und ein zwischen dem ersten und dem zweiten Bauteil (2,3) angeordnetes Klebemittel (4) bereitgestellt werden, wobei in einem zweiten Verfahrensschritt das erste und das zweite Bauteil (2, 3) zusammengepresst werden und wobei in einem dritten Verfahrensschritt das Klebemittel (4) ausgehärtet wird, wobei dem Klebemittel (4) Abstandsmittel (5) beigefügt werden, welche im dritten Verfahrensschritt vom Klebemittel (4) zumindest teilweise resorbiert werden, **dadurch gekennzeichnet, dass** die Abstandsmittel (5) aus einem mit einem Bindemittel beschichteten Trägermaterial hergestellt werden.

2. Fügeverfahren nach Anspruch 1, wobei im dritten Verfahrensschritt das Klebemittel mittels kathodischer Tauchlackierung ausgehärtet wird.

3. Fügeverfahren nach einem der vorhergehenden Ansprüche, wobei dem Klebemittel (4) starre oder halbstarre Abstandsmittel (5) beigefügt werden und/oder wobei dem Klebemittel (4) kugelförmige Abstandsmittel (5) beigefügt werden.

4. Fügeverfahren nach einem der Ansprüche 1 bis 3, wobei das Bindemittel in einem vor dem zweiten Verfahrensschritt durchgeführten Zwischenschritt aktiviert wird.

5. Fügeverfahren nach einem der vorhergehenden Ansprüche, wobei die Abstandsmittel (5) im dritten Verfahrensschritt zumindest teilweise im Klebemittel (4) gelöst und/oder chemisch gebunden werden.

6. Fügeverfahren nach einem der vorhergehenden Ansprüche, wobei im ersten Verfahrensschritt das Klebemittel (4) auf das erste und/oder zweite Bauteil (2, 3) appliziert wird, wobei die Abstandsmittel (5) dem Klebemittel (4) beim Applizieren des Klebemittels (4) auf das erste und/oder zweite Bauteil (2, 3) oder zeitlich vor dem Applizieren des Klebemittels (4) auf das erste und/oder zweite Bauteil (2, 3) beigefügt werden.

7. Fügeverfahren nach einem der vorhergehenden Ansprüche, wobei im ersten Verfahrensschritt das erste Bauteil (2) in Form eines ersten Blechbauteils und das zweite Bauteil (3) in Form eines zweiten Blechbauteils bereitgestellt werden.

8. Herstellungsverfahren zur Herstellung eines Fahrzeugsitzes mit einem ersten Bauteil (2) und einem zweiten Bauteil (3), wobei das erste Bauteil (2) mit dem zweiten Bauteil (3) mittels eines Fügeverfahrens gemäß einem der vorhergehenden Ansprüche verbunden wird.

9. Bauteilanordnung (1) mit einem ersten Bauteil (2) und einem zweiten Bauteil (3), wobei das erste Bauteil (2) und das zweite Bauteil (3) über eine Klebestelle miteinander verbunden sind, wobei im Bereich der Klebestelle ein ausgehärtetes Klebemittel (4) angeordnet ist, wobei das ausgehärtete Klebemittel (4) mit zumindest teilweise vom Klebemittel (4) resorbierten Abstandsmitteln (5) versetzt ist, **dadurch gekennzeichnet, dass** die Abstandsmittel (5) ein Trägermaterial aufweisen, welches mit einem Bindemittel beschichtet ist.

10. Bauteilanordnung (1) nach Anspruch 9, wobei die Abstandsmittel (5) als kugelförmige starre oder halbstarre Abstandsmittel (5) ausgebildet sind und/oder wobei das erste Bauteil (2) ein erstes Blechbauteil und das zweite Bauteil (3) ein zweites Blechbauteil umfasst.

11. Bauteilanordnung (1) nach einem der Ansprüche 9 oder 10, wobei die Abstandsmittel (5) Aluminiumkügelchen aufweisen, welche mit einem Bindemittel beschichtet sind.

12. Bauteilanordnung (1) nach einem der Ansprüche 9 oder 11, wobei die Abstandsmittel (5) zumindest teilweise im Klebemittel (4) gelöst und/oder chemisch gebunden sind.

13. Fahrzeugsitz aufweisend eine Bauteilanordnung (1) nach einem der Ansprüche 9 bis 12.

## Claims

1. Joining method for connecting a first component (2) to a second component (3), in a first method step the first component (2), the second component (3) and an adhesive (4) arranged between the first and the second component (2, 3) being provided, in a second method step the first and the second component (2, 3) being pressed together and, in a third method step the adhesive (4) being cured, spacing means (5) which, in the third method step, are at least partly resorbed by the adhesive (4), being added to the adhesive (4), **characterized in that** the spacing means (5) are produced from a carrier material coated with a binding agent.

2. Joining method according to Claim 1, wherein in the third method step the adhesive is cured by means of cathodic dip varnishing.

3. Joining method according to one of the preceding claims, wherein rigid or semi-rigid spacing means (5) are added to the adhesive (4), and/or wherein spherical spacing means (5) are added to the adhesive (4).

4. Joining method according to one of Claims 1 to 3, wherein the binding agent is activated in an intermediate step carried out before the second method step.

5. Joining method according to one of the preceding claims, wherein the spacing means (5) are at least partly dissolved and/or chemically bound in the adhesive (4) in the third method step.

6. Joining method according to one of the preceding claims, wherein, in the first method step, the adhesive (4) is applied to the first and/or second component (2, 3), wherein the spacing means (5) are added to the adhesive (4) during the application of the adhesive (4) to the first and/or second component (2, 3) or chronologically before the application of the adhesive (4) to the first and/or second component (2, 3).

7. Joining method according to one of the preceding claims, wherein in the first method step the first component (2) is provided in the form of a first sheet metal component, and the second component (3) is provided in the form of a second sheet metal component.

8. Manufacturing method for manufacturing a vehicle seat comprising a first component (2) and a second component (3), wherein the first component (2) is connected to the second component (3) by means of a joining method according to one of the preceding claims.

9. Component assembly (1) comprising a first component (2) and a second component (3), the first component (2) and the second component (3) being connected to each other via an adhesive point, a cured adhesive (4) being arranged in the region of the adhesive point, the cured adhesive (4) having spacing means (5) that are at least partly resorbed by the adhesive (4) added to it, **characterized in that** the spacing means (5) have a carrier material which is coated with a binding agent.

10. Component assembly (1) according to Claim 9, wherein the spacing means (5) are formed as spherical rigid or semi-rigid spacing means (5) and/or wherein the first component (2) comprises a first sheet metal component and the second component (3) comprises a second sheet metal component.

11. Component assembly (1) according to either of Claims 9 and 10, wherein the spacing means (5) have little aluminium spheres which are coated with a binding agent.

12. Component assembly (1) according to either of Claims 9 and 11, wherein the spacing means (5) are at least partly dissolved and/or chemically bound in the adhesive (4).

13. Vehicle seat having a component assembly (1) according to one of Claims 9 to 12.

## Revendications

1. Procédé d'assemblage pour relier un premier élément structural (2) un deuxième élément structural (3), une première étape du procédé consistant à fournir le premier élément structural (2), le deuxième élément structural (3) et un adhésif (4) disposé entre le premier et le deuxième élément structural (2, 3), une deuxième étape du procédé consistant à presser le premier et le deuxième élément structural (2, 3) l'un contre l'autre et une troisième étape du procédé consistant à faire durcir l'adhésif (4), des moyens d'espacement (5) étant ajoutés à l'adhésif (4), lesquels sont au moins partiellement résorbés par l'adhésif (4) dans la troisième étape du procédé, **caractérisé en ce que** les moyens d'espacement (5) sont fabriqués dans un matériau porteur enrobé d'un liant.

2. Procédé d'assemblage selon la revendication 1, selon lequel, dans la troisième étape du procédé, l'adhésif est durci par vernissage cathodique à immersion.

3. Procédé d'assemblage selon l'une des revendications précédentes, des moyens d'espacement (5) rigides ou semi-rigides étant ajoutés à l'adhésif (4) et/ou des moyens d'espacement (5) de forme sphérique étant ajoutés à l'adhésif (4).

4. Procédé d'assemblage selon l'une des revendications 1 à 3, le liant étant activé dans une étape intermédiaire exécutée avant la deuxième étape du procédé.

5. Procédé d'assemblage selon l'une des revendications précédentes, les moyens d'espacement (5), dans la troisième étape du procédé, étant au moins partiellement dissouts et/ou liés chimiquement dans l'adhésif (4).

6. Procédé d'assemblage selon l'une des revendications précédentes, selon lequel, dans la première étape du procédé, l'adhésif (4) est appliqué sur le premier et/ou le deuxième élément structural (2, 3), les moyens d'espacement (5) étant ajoutés à l'adhésif (4) lors de l'application de l'adhésif (4) sur le premier et/ou le deuxième élément structural (2, 3) ou temporellement avant l'application de l'adhésif (4) sur le premier et/ou le deuxième élément structural (2, 3).

7. Procédé d'assemblage selon l'une des revendications précédentes, selon lequel, dans la première étape du procédé, le premier élément structural (2) est fourni sous la forme d'un premier élément structural en tôle et le deuxième élément structural (3) sous la forme d'un deuxième élément structural en tôle.

8. Procédé de fabrication pour la fabrication d'un siège de véhicule comprenant un premier élément structural (2) et un deuxième élément structural (3), le premier élément structural (2) étant relié au deuxième élément structural (3) au moyen d'un procédé d'assemblage selon l'une des revendications précédentes.

9. Arrangement d'éléments structuraux (1) comprenant un premier élément structural (2) et un deuxième élément structural (3), le premier élément structural (2) et le deuxième élément structural (3) étant assemblés l'un avec l'autre par le biais d'un point de collage, un adhésif (4) durci étant disposé dans la zone du point de collage, l'adhésif (4) durci étant déplacé avec des moyens d'espacement (5) au moins partiellement résorbés par l'adhésif (4), **caractérisé en ce que** les moyens d'espacement (5) possèdent un matériau porteur qui est enrobé d'un liant.

10. Arrangement d'éléments structuraux (1) selon la revendication 9, les moyens d'espacement (5) étant réalisés sous la forme de moyens d'espacement (5) rigides ou semi-rigides de forme sphérique et/ou le premier élément structural (2) comportant un premier élément structural en tôle et le deuxième élément structural (3) comportant un deuxième élément structural en tôle.

11. Arrangement d'éléments structuraux (1) selon l'une des revendications 9 ou 10, les moyens d'espacement (5) possédant des petites billes en aluminium qui sont enrobées d'un liant.

12. Arrangement d'éléments structuraux (1) selon l'une des revendications 9 à 11, les moyens d'espacement (5) étant au moins partiellement dissouts et/ou liés chimiquement dans l'adhésif (4).

13. Siège de véhicule possédant un arrangement d'éléments structuraux (1) selon l'une des revendications 9 à 12.
